# EUROPEAN PATENT APPLICATION

(11) **EP 2 312 446 A2**
(43) Date of publication of application: **20.04.2011**
(21) Application number: 09773726.6
(22) Date of filing: 01.07.2009
(51) Int. Cl.: G06F 13/10

(54) **TERMINAL APPARATUS USING A PERIPHERAL APPARATUS OF ANOTHER TERMINAL VIA THE CONTROL OF ONE TERMINAL, AND INTERFACE METHOD THEREOF**

(30) Priority: 02.07.2008 KR 20080064081
(71) Applicant: Ryu, Sang-Kyu, Gyeonggi-do 437-727 (KR); Ryu, Jun-Sun, Seoul 135-796 (KR)
(72) Inventor: RYU, Jun-Sun, Seoul 135-796 (KR)
(74) Representative: Chimini, Francesco
(86) International application number: PCT/KR2009/003590
(87) International publication number: WO 2010/002190

(57) **Abstract**

The present invention relates to a terminal apparatus in which a first terminal apparatus controls and uses a peripheral apparatus of a second terminal apparatus at the state where the first terminal apparatus and the second terminal apparatus are interconnected with each other. The terminal apparatus according to the present invention enables the first terminal apparatus to independently and directly control the peripheral apparatus of the second terminal apparatus at the state where the first terminal apparatus is connected to the second terminal apparatus and use functions of the second terminal apparatus, wherein the terminal apparatus serves as the first terminal apparatus, and includes: a connection means for the wired connection to the second terminal apparatus; a control means for controlling the peripheral apparatus of the wire-connected second terminal apparatus; a transmitting emulator means for converting data to transmit data of the first terminal apparatus to the second terminal apparatus; and a receiving emulator means for converting input data of the second terminal apparatus into data of the first terminal apparatus.

## Description

### [Technical Field]

The present invention relates to a terminal controlling and using peripherals of another terminal, and an interface method thereof. The same or different kinds of terminals are connected and a first terminal controls the peripherals of a second terminal connected with the first terminal to user the output and input functions of the peripherals. While the second terminal provides the functions of the peripherals for the first terminal, the others, except for the peripherals that the first terminal currently uses, are in an idle state or are supplied with power from the first terminal, with the second terminal turned off, thereby reducing power consumption of the second terminal.

### [Background Art]

When two terminals are connected and a first terminal uses the peripheral of a second terminal, the CPUs of both two terminals are in operation. For example, for outputting data, the first terminal transmits output data to the second terminal and the second terminal outputs the received output data to the peripheral. Further, for inputting data, the second terminal receives data from a user through an input device and transmits the input data to the first terminal. As described above, when two terminals are connected and the first terminal uses the peripherals of the second terminal, the hardware of both terminals is all in operation and power is consumed.

In this environment, when a small first terminal is connected with a relatively second terminal and uses the peripherals (input device and output device) of second terminal, the second terminal supplies power to make all the elements ready for use, even though it allows the first terminal to use only some of its peripherals.

### [Disclosure]

### [Technical Problem]

The present invention has been made in consideration of the problems described above and it is an object of the present invention to allows a second terminal to make other elements in an idle state (sleep state), except for peripherals provided for a first terminal, or make the first terminal supply power to the second terminal to use the peripherals, when two independent terminals are connected and the first terminal controls and uses the peripherals of the second terminal.

### [Technical Solution]

In order to achieve the object of the present invention, a terminal, which functions as a first terminal that is connected with a second terminal and uses at least one of an image output function, a voice output function, and a data output function of a second terminal by independently and directly controlling peripherals of the second terminal, includes: a connector that is connected with the second by a wire; a control unit that controls the peripherals of the wire-connected second terminal; a transmitting emulator that converts data of the first terminal to transmit data to the second terminal, through the connector; and a receiving emulator that converts input data of the second terminal, which is transmitted through the connector, into a data of the first terminal.

According to a preferred feature of the present invention, the first terminal further includes a senor that automatically senses the type and at least one or more available peripherals of the second terminal, when the connector is connected with the second terminal, such that the transmitting emulator and the receiving emulator automatically convert the data into a data format corresponding to the automatically sensed type and peripherals of the second terminal.

Preferably, the first terminal further includes a unit that automatically installs and executes drive programs for using the peripherals of the second terminal, when the second terminal is connected by the connector.

Further, the first terminal may download and install the drive programs from internet, when the first terminal can be connected with internet.

Preferably, the terminal functions as the second terminal and includes an idle button, and a unit that stops supplying power to the other elements, except for the peripherals that are used by the first terminal, when being connected with the first terminal and the idle button is turned on.

Further, when being connected with a different type of second terminal, the first terminal may transmit a key button input screen of the first terminal to the second terminal, and receive data input from a user in the same key input way as the first terminal through the screen of the second terminal.

Preferably, the first terminal has a function of charging a built-in battery by using power supplied from the second terminal, and a function of charging a built-in battery of the second terminal by supplying power to the second terminal, when being connected with the second terminal by a wire.

According to an interface method of a terminal controlling and using peripherals of another terminal, the interface method in which first terminal is connected with a second terminal and uses at least one of an image output function, a voice output function, and a data output function of a second terminal by independently and directly controlling peripherals of the second terminal, includes: a step in which the first terminal automatically senses the type and at least one or more peripherals of the second terminal, when the first terminal is connected with the second terminal (S11); a step in which the second terminal stops supplying power to the other elements, except for the peripherals that are used by the first terminal, when an idle button of the second terminal is turned on(S12); a step in which the first terminal converts image output data into image output data of the second terminal and transmits the image output data to the second terminal, and then outputs the image output data by controlling the peripherals of the second terminal, when the first terminal outputs a screen (S13); a step in which the first terminal converts voice output data into voice output data of the second terminal and transmits the voice output data to the second terminal, and then outputs the voice output data by controlling the peripherals of the second terminal, when the first terminal outputs a voice (S14); and a step in which the first terminal receives input data from the second data, and then converts the input data into input data corresponding to the first terminal and receives the input data, when data is inputted into the second terminal (S15).

### [Advantageous Effects]

According to the present invention, when the first terminal and the second terminal are connected with each other and the first terminal uses functions of image output, voice output, an data input of peripherals of the second terminal by controlling the peripherals, power consumed by the second terminal is reduced by stopping supplying power to elements of the second terminal which are not used by the first terminal

### [Description of Drawings]

The accompanying drawings in the specification exemplify preferred embodiments of the present invention to help understand the scope of the present invention together with the following description of the embodiments, and the present invention should not be construed in limitation to those shown in the drawings.

FIG. 1 is a diagram illustrating the configuration of a terminal controlling and using peripherals of anther terminal according to the present invention;

FIG. 2 is a diagram illustrating the internal configuration of a terminal according to an embodiment of the present invention;

FIG. 3 is a diagram illustrating an addition internal configuration of the terminal according to an embodiment of the present invention;

FIG. 4 is a view showing an example of the key input window of a first terminal which is display through a second terminal according to an embodiment of the present invention; and

FIG. 5 is a flowchart illustrating an interface method of the terminal according to an embodiment.

### [Best Mode]

Hereinafter, the configuration of a preferred embodiment of the present invention is described in detail with reference to the accompanying drawings.

### <1. Configuration of System>

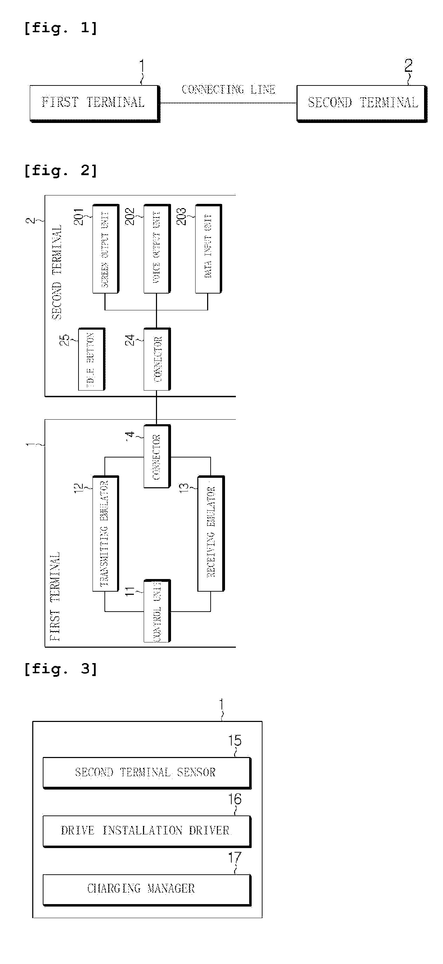

FIG. 1 shows a technical model of terminals 1, 2 according to the present invention.

A terminal according to the present invention include a processor (e.g. CPU), a storage (e.g. memory and disc), an output device (e.g. monitor and speaker), and an input device (e.g. keyboard and key buttons) and independently performs specific functions. For example, mobile communication terminals, PDAs, UMPCs, PMPs, MP3 players, portable game machines, digital cameras, DMBs, navigation devices, and TVs etc., in addition to notebooks and desktops, may be used.

However, for the convenience of description, the terminal that controls the other terminal connected thereto is referred to as the first terminal 1 and the other terminal that is controlled to allow the first terminal 1 to uses its peripherals is referred to as the second terminal 2. That is, the first terminal 1 independently and directly uses the peripherals of the second terminal 2. The "independently and directly using" herein implies that the processor and programs of the first terminal 1 independently control and use the peripherals of the second terminal 2, excluding the processor and programs of the second terminal 2.

Meanwhile, the first terminal 1 may be a small terminal and the second terminal 2 may be a terminal having relatively larger display and input device than the first terminal 2. Obviously, on the contrast, the first terminal 1 may be a large terminal and the second terminal 2 may be a small terminal. For example, the first terminal 1 is a notebook and the there is a problem in the monitor, it may be possible, inconvenient though, to work with the notebook, using the display of the second terminal 2, which is a mobile communication terminal.

In the present invention, the first terminal 1 is connected with the same kind or different kind of second terminal 2, and independently and directly controls and uses the peripherals of the second terminals 2 as its own peripherals. The first terminal 1 selectively uses any one or more of the image display function, voice output function, and a data input function that the peripherals of the second terminal 2 have. That is, a user of the first terminal 1 can see image data in the first terminal 1 through the display of the second terminal 2, by using the second terminal 2 and receive data inputted into the second terminal 2 from the second terminal 2.

Preferably, when the first terminal 1 directly controls and uses the peripherals of the second terminal 2, some of the elements of the second terminal 2 which correspond to the functions used by the first terminal 1 are used, and the others are not used. Therefore, second terminal 2 supplies power only to the elements used by the first terminal 1 and does not provide power to the elements that are not used. Accordingly, the central control unit (e.g. CPU or MCU) of the second terminal is not supplied with power and turned off.

An example of usage environment of the second terminal 2 according to the technical model is as follows. A user of a mobile communication terminal connects the terminal with a notebook to use a larger screen. The same images as all of the images displayed on the liquid crystal display screen of the mobile communication terminal are displayed on the monitor screen of the notebook upon completing connection, and all input data that the user inputs with the notebook keyboard is transmitted to the mobile communication terminal. Further, screen data of the mobile communication terminal that is changed by the key input from the user is transmitted and displayed again on the notebook monitor. Further, in order to make a text message with the mobile communication terminal, the user input characters with the notebook keyboard in the text message screen of the monitor and the input data is directly transmitted to the first terminal 1 from the notebook keyboard. Obviously, when the mobile communication terminal receives a call signal while making the text message, the screen on the monitor of the notebook is converted in a screen showing that a call signal has been received.

It is preferable that the battery of any one terminal can charge the battery of the other by control of the first terminal 1, when the first terminal 1 and the second terminal 2 are connected. In the embodiment described above, when the first terminal 1 is a mobile communication terminal and connected to control a notebook, the mobile communication terminal can charge the battery of the notebook. In this configuration, the mobile communication terminal may be supplied with power by socket connection, or may provide the notebook with the power of a built-in battery without socket connection. On the contrary, the mobile communication terminal may be supplied with power from an external power supply or the power of the built-in battery of the notebook and the built-in battery of the mobile communication terminal may be charged, under control of the mobile communication terminal.

FIG. 2 shows the internal configuration for data conversion and communication between the first terminal 1 and the second terminal 2 according to an embodiment of the present invention.

The first terminal 1 of the present invention includes a control unit 11 that controls the first terminal 1 and also controls the second terminal, a transmitting emulator 12 that converts data to transmit to the second terminal 2 to fit the format of the second terminal 2, a receiving emulator 13 that converts the input data transmitted from the second terminal 2 to fit to the format of the first terminal 1, and a connector that is connected with the second terminal 2.

The second terminal 2 of the present invention includes a connector 24 connected with the first terminal 1 and an idle button 25 for supplying power only to peripherals that the first terminal 1 uses, and cuts power for the other elements that are not used. When the idle button 25 of the second terminal is turned on, power supply for the other elements of the second terminal 2, which are not used, except for the elements for using an screen output unit 201, a voice output unit 202, and a data input unit 203, is stopped.

Substantially, a terminal according to the present invention has all of the components of the first terminal 1 and the second terminal, so that it can function as the first terminal 1, when connecting with another terminal and controlling the another terminal, and can also function as the second terminal 2 when being controlled by another terminal.

FIG. 3 shows additional components of the first terminal 1.

A second terminal sensor 15 automatically senses the type of the second terminal 2 and available peripherals, when the first terminal 1 is connected with the second terminal 2.

A drive installation driver 16 executes drive programs corresponding to the type of the second terminal 2 and the peripherals, which have been automatically sensed. When the drive programs are not installed, they are installed and then executed, or when the first terminal 1 has an internet function, the drive programs are downloaded from internet and the executed.

As described above, after the information on the type and peripherals of the second terminal 2, data format conversion corresponding features between them is determined, such that the transmitting emulator 12 and the receiving emulator 13 can convert data, in accordance with the determined data format conversion. For example, when the first terminal 1 uses the screen output unit 201 of the second terminal 2, resolution and display properties according to features of the screen output unit 201 are ascertained and image output data of the first terminal 1 is changed into a data format that the screen output unit 201 of the second terminal 2 can output.

A charging manager 17 is controlled by the first terminal 1 to allow the first terminal 1 to charge the battery of the second terminal 2, and to be supplied with power from the second terminal 2 and charge the battery of the first terminal 1. The unit providing power is supplied with power from the outside by being connected to a socket or the power of the built-in battery may be used, which was described above.

The detailed functions and operations of the components in the terminals 1, 2 shown in FIGS. 2 and 3 are described by means of an expansion interface method, which is described below.

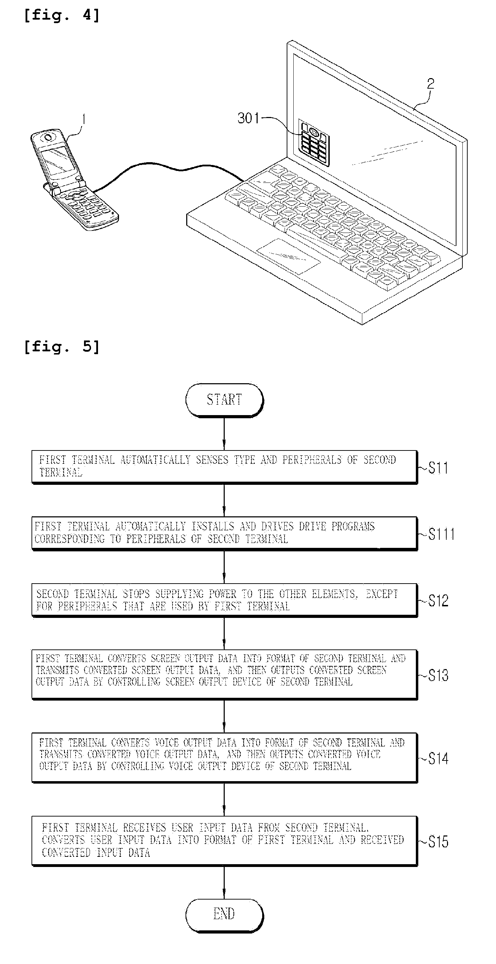

FIG. 4 exemplifies a key input window 301 of the first terminal 1 which is displayed by the second terminal according to an embodiment of the present invention.

When the first terminal 1 is a mobile communication terminal and connected with a notebook that is the section terminal 2, the mobile communication has exclusive keys, which directly performs exclusive functions, in an input device. For example, the keys are a menu button, a wireless internal connection button, a send button, an OK button, and an end button etc. The exclusive keys are not provided in the keyboard of the notebook 2. Therefore, according to the present invention, the second terminal is provided with the key input window 301 of the first terminal 1 such that the exclusive key buttons of the first terminal can be used through the second terminal 2. FIG. 4 shows the key input window 301 of the mobile communication terminal which is displayed on the monitor screen of the note book 2. Therefore, a user can operates the exclusive keys in the same input way as the mobile communication terminal 1, using the key input window 301.

### <2. Configuration of Method>

A terminal controlling and using peripherals of another terminal, and an interface method thereof, according to an embodiment of the present invention can be preferably implemented by constructing the terminals 1, 2 described above.

FIG. 5 is a flowchart illustrating the order of the interface method of the terminals 1, 2 according to an embodiment of the present invention.

A user of the first terminal 1 connects connectors 14, 24 to use peripherals of the second terminal 2.

The second terminal sensor 15 of the first terminal 1 automatically senses the type and at least one available peripheral of the connected second terminal 2 (S11). The drive installation driver 16 executes drive programs corresponding to desired peripherals of the second terminal 2 on the basis of the sensed results, or installs and then executes corresponding drive programs, when they are not installed (S111). If the first terminal 1 has an internet connection function, it is possible to search and download the corresponding programs from internet and then install them, in order to install the drive programs.

Thereafter, when the user turns on an idle button 25 of the second terminal 2 to save power of the second terminal 2 that is controlled by the first terminal 1, the second terminal 2 stops supplying power to the other elements, except for the elements that the first terminal 1 uses (S12).

Thereafter, the image output function, voice output function, and data output function of the first terminal, between the first terminal 1 and the second terminal 2 that are connected with each other, are implemented by the peripherals of the second terminal 2, in which the peripherals of the second terminal 2 is controlled by the first terminal 1.

When a screen is outputted from the first terminal 1, the transmitting emulator 12 converts the image output data of the first terminal 1 into image output data corresponding to the second terminal 2, on the basis of the automatically sensed information on the second terminal 2, and then transmits the image output data to the second terminal 2 through the connector 14 (S13).

When a voice is outputted from the first terminal 1, the transmitting emulator 12 converts voice output data of the first terminal 1 into voice output data corresponding to the automatically sensed voice output unit 202 of the second terminal 2 and then transmits the voice output data (S14). The steps S13 and S14 are simultaneously performed to output video data from the first terminal 1.

Further, when a user inputs data into the external second terminal 2, the receiving emulator 13 converts the user input data transmitted from the second terminal 2 into input data corresponding to the first terminal 1 and the first terminal 1 performs a function corresponding to the input data.

An embodiment of a terminal controlling and using peripherals of another terminal, and an interface method thereof, according to the present invention is implemented, as described above. Although the present invention was described with reference to a limitative embodiment and drawings, the present invention is not limited thereto, and it should be noted that the present invention may be changed in various ways by those skilled in the art, within a range equivalent to the scope of the present invention and the following claims.

## Claims

1. A terminal, in which the terminal functions as a first terminal that is connected with a second terminal and uses at least one of an image output function, a voice output function, and a data output function of a second terminal by independently and directly controlling peripherals of the second terminal, the terminal comprising:
a connector that communicates data with the second terminal in wire connection;
a control unit that controls the peripherals of the wire-connected second terminal;
a transmitting emulator that converts transmission data of the first terminal to transmit the transmission data in data, which is available in the second terminal, through the connector; and
a receiving emulator that converts transmission data of the second terminal, which is transmitted through the connector, into data that is available in the first terminal.

2. The terminal according to claim 1, wherein the first terminal further includes a senor that automatically senses the type and at least one or more available peripherals of the second terminal, when the connector is connected with the second terminal, such that the transmitting emulator and the receiving emulator automatically convert the data into any one of a data format of the first terminal and a data format corresponding to the automatically sensed type and peripherals of the second terminal.

3. The terminal according to claim 1 or 2, wherein the first terminal further includes a unit that automatically installs and executes drive programs for using the peripherals of the second terminal, when the second terminal is connected by the connector.

4. The terminal according to claim 3, wherein the first terminal downloads and installs the drive programs from internet, when the first terminal can be connected with internet.

5. The terminal according to claim 1, wherein the terminal functions as the second terminal and includes an idle button, and
a unit that stops supplying power to the other elements, except for the peripherals that are used by the first terminal, when the second terminal is connected with the first terminal and turned on and the idle button is turned on.

6. The terminal according to claim 1, wherein when being connected with a different type of second terminal, the first terminal transmits a key button input screen of the first terminal to the second terminal, and receives data input from a user in the same key input way as the first terminal through the key button input screen displayed on the screen of the second terminal.

7. The terminal according to claim 1, wherein the first terminal has a function of charging a built-in battery by using power supplied from the second terminal, and a function of charging a built-in battery of the second terminal by supplying power to the second terminal, when being connected with the second terminal by a wire.

8. An interface method of a terminal, in which a first terminal is connected with a second terminal and uses at least one of an image output function, a voice output function, and a data output function of a second terminal by independently and directly controlling peripherals of the second terminal, the interface method comprising:
a step in which the first terminal automatically senses the type and at least one or more peripherals of the second terminal, when the first terminal is connected with the second terminal (S11);
a step in which the second terminal stops supplying power to the other elements, except for the peripherals that are used by the first terminal, when an idle button is turned on, with the second terminal turned on (S12);
a step in which the first terminal converts image output data into image output data of the second terminal and transmits the image output data to the second terminal, and then outputs the image output data by controlling the peripherals of the second terminal, when the first terminal outputs a screen to the second terminal (S13);
a step in which the first terminal converts voice output data into voice output data of the second terminal and transmits the voice output data to the second terminal, and then outputs the voice output data by controlling the peripherals of the second terminal, when the first terminal outputs a voice to the second terminal (S14); and
a step in which the first terminal receives input data from the second data, and then converts the input data into input data corresponding to the first terminal and receives the input data, when data is inputted into the second terminal (S15).

9. The interface method according to claim 8, wherein the first terminal automatically converts the data into any one of a data format of the first terminal and a data format corresponding to the automatically sensed type and peripherals of the second terminal, in any one of the steps S13 to S15.

10. The interface method according to claim 8, wherein the step S11 further includes a step in which the first terminal automatically installs or executes drive programs for using the peripherals of the second terminal, when being connected with the second terminal.

11. The interface method according to claim 10, wherein the first terminal downloads and installs the drive programs from internet, when the first terminal can be connected with internet.

12. The interface method according to claim 8, wherein when being connected with a different type of second terminal, the first terminal transmits a key button input screen of the first terminal to the second terminal, and receives data input from a user in the same key input way as the first terminal through the key button input screen displayed on the screen of the second terminal.

13. The interface method according to claim 8, wherein the first terminal has a function of charging a built-in battery by using power supplied from the second terminal, and a function of charging a built-in battery of the second terminal by supplying power to the second terminal, when being connected with the second terminal by a wire.
